## Europäisches Patentamt

## European Patent Office

## Office européen des brevets

(19)

(11) **EP 0 899 846 A2**

(12) **EUROPÄISCHE PATENTANMELDUNG**

(43) Veröffentlichungstag:
03.03.1999 **Patentblatt 1999/09**

(51) Int. Cl.⁶: **H02H 1/06**, H02H 3/093

(21) Anmeldenummer: 98250307.0

(22) Anmeldetag: 28.08.1998

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **29.08.1997 DE 19738700
29.08.1997 DE 19738701
28.10.1997 DE 19749696**

(71) Anmelder:
**SIEMENS AKTIENGESELLSCHAFT
80333 München (DE)**

(72) Erfinder:
• **Baumgärtl, Ulrich
13599 Berlin (DE)**
• **Röhl, Wolfgang
13503 Berlin (DE)**
• **Hochgraef, Holger
16845 Ganzer (DE)**

(54) **Schaltungsanordnung zur Betätigung eines Auslösemagneten eines Leistungsschalters**

(57) Eine Schaltungsanordnung zur Betätigung eines Auslösemagneten (7) eines Leistungsschalters (Hauptstrombahn 1, Schaltkontakt 2) umfaßt eine durch einen Stromwandler (3) gespeiste Gleichrichterschaltung (13) und eine Kapazität (12) als Energiespeicher. Eine Überwachungsschaltung (15) als Bestandteil einer Mikroprozessoreinrichtung (6) erfaßt den Ladezustand der Kapazität (12) und erzeugt ein Steuersignal, wenn eine zur sicheren Betätigung des Auslösemagneten (7) ausreichende Energie vorhanden ist. Hierzu weist die Überwachungsschaltung (15) einen Schaltungsteil zur Messung des Kapazitätswertes und der erforderlichen Ladespannung auf. Die beschriebene Schaltungsanordnung ermöglicht eine schnelle Bereitschaft zur Auslösung auch dann, wenn die Kapazität (12) mit Rücksicht auf eine unvermeidliche Alterung im Neuzustand einen mehrfach zu hohen Kapazitätswert aufweist. Die Kapazität kann durch einen einzelnen oder mehrere parallelgeschaltete Kondensatoren gebildet sein.

FIG 1

EP 0 899 846 A2

Printed by Xerox (UK) Business Services
2.16.7/3.6

**Beschreibung**

Die Erfindung betrifft eine Schaltungsanordnung zur Betätigung eines Auslösemagneten eines Leistungsschalters mit einer durch einen Stromwandler gespeisten Gleichrichterschaltung, einer durch die Gleichrichterschaltung aufzuladenden, einschließlich eines Sicherheitszuschlages hinsichtlich ihres Kapazitätswertes bemessenen Kapazität zur Speisung des Auslösemagneten und einem in Reihe mit einer Wicklung des Auslösemagneten geschalteten, durch eine Auslöseschaltung betätigbaren Schalter zur Entladung der Kapazität über die Wicklung des Auslösemagneten.

Schaltungsanordnung mit diesen Merkmalen sind in der Technik der Leistungsschalter allgemein bekannt und beispielsweise in der US 4 208 693 A beschrieben. Während hierbei die zur Betätigung des Auslösemagneten benötigte elektrische Energie in einem Kondensator zwischengespeichert wird, ist es auch bekannt, daß der Auslösemagnet direkt von dem Sekundärstrom des zu dem Leistungsschalter gehörenden Stromwandlers (bzw. mehrerer Stromwandler, wenn es sich um einen mehrpoligen Leistungsschalter handelt) gespeist werden kann (US 5 369 542 A). Diese Schaltung hat den Vorteil, daß die Auslösung mit der geringsten möglichen Verzögerung erfolgt, weil der Zeitbedarf für die Aufladung des erwähnten Kondensators entfällt. Anderseits erfordert es der große Unterschied zwischen den kleinsten und den größten Strömen, bei denen eine Auslösung durchzuführen ist, eine Überlastung des Auslösemagneten durch hohe Sekundärströme des Stromwandlers beim Auftreten eines Kurzschlusses in der Hauptstrombahn des Leistungsschalters zu verhindern. Dies geschieht nach der genannten US 5 369 542 A durch einen Auslösemagneten mit zwei Wicklungen, von denen die eine Wicklung verhältnismäßig wenige Windungen mit einem verhältnismäßig großen Querschnitt und die andere Wicklung verhältnismäßig viele Windungen mit einem verhältnismäßig kleinen Querschnitt aufweist. In Abhängigkeit von dem jeweils fließenden Sekundärstrom des Stromwandlers wird aufgrund einer selbsttätigen Steuerung die eine oder die andere Wicklung zur Auslösung benutzt.

Ein Auslösemagnet mit zwei unterschiedlichen Wicklungen ist jedoch kein Standardbauelement und kann daher nicht unbeträchtliche Mehrkosten verursachen, die sowohl durch die Besonderheit seiner Konstruktion als auch durch das größere Volumen bedingt sind, das für den Einbau des Auslösemagneten in dem Leistungsschalter freigehalten werden muß.

Hiervon ausgehend liegt der Erfindung die Aufgabe zugrunde, eine Auslösung mit möglichst geringer Verzögerung ähnlich wie bei der Schaltungsanordnung nach der genannten US 5 369 542 A zu ermöglichen, jedoch unter Verwendung eines Auslösemagneten mit geringen Abmessungen und einer Kapazität zur Speicherung der Auslöseenergie.

Diese Aufgabe wird gemäß der Erfindung dadurch gelöst, daß eine Überwachungsschaltung zur Erfassung des Ladezustandes der Kapazität und zur Abgabe eines Steuersignales beim Erreichen einer zur sicheren Betätigung des Auslösemagneten ausreichende Energie vorgesehen ist, wobei die Überwachungsschaltung einen Schaltungsteil zur Messung des Kapazitätswertes der Kapazität und zur Berechnung der zum Erreichen der geforderten Energie benötigten Ladespannung bei gegebener Kapazität.

Die Erfindung beruht auf der Überlegung, daß trotz der Anwendung des Prinzips, eine Kapazität zur Speicherung der Energie zum Betrieb des Auslösemagneten zu benutzen, im Bedarfsfall eine sehr rasche Auslösung durch sorgfältige Abstimmung der bereitgestellten Energie auf den Bedarf des Auslösemagneten möglich ist. Diese Bedingung ist durch die Bemessung der betreffenden Kapazität allein nicht einzuhalten, weil ein Leistungsschalter über einen langen Zeitraum von etwa dreißig Jahren funktionsfähig sein muß und daher die unvermeidliche Alterung von Bauteilen, insbesondere der Alterung eines die genannte Kapazität bildenden Kondensators, berücksichtigt werden muß. Bisher geschieht dies dadurch, daß Kondensatoren mit einem so hohen Anfangswert ihrer Kapazität verwendet werden, daß noch gegen Ende der erwähnten Lebensdauer des Leistungsschalters ein ausreichender Kapazitätswert zur Verfügung steht. Hierzu muß der Kapazitätswert im Neuzustand des Leistungsschalters mehrfach, z.B. drei- bis vierfach über dem eigentlich notwendigen Wert liegen. Dementsprechend lang ist hierdurch bei einem neuen Leistungsschalter der Bedarf an Zeit für die Aufladung der Kapazität und damit die unerwünschte Verzögerung der Auslösung. Die Erfindung behebt diese Schwierigkeit durch die genannte Überwachungsschaltung und erlaubt es ferner, zur Erhöhung der Zuverlässigkeit des Leistungsschalters über einen langen Zeitraum eine Kapazität mit einem noch weiter erhöhten Kapazitätswert zu wählen, ohne daß hierdurch ein Nachteil für das Ansprechen auf einen von der Auslöseschaltung abgegebenen Auslösebefehl entsteht.

Im Rahmen der Erfindung kann der Schaltungsteil zur Messung des Kapazitätswertes der Kapazität und der zum Erreichen der geforderten Energie benötigten Ladespannung durch eine zu der Auslöseschaltung gehörende Mikroprozessoreinrichtung gebildet sein. Daher ist der Aufwand für die Ladesteuerschaltung gering. Die in bekannten elektronischen Überstromauslösern eingesetzten Mikroprozessoreinrichtungen sind durch die Verarbeitung der mit dem Schutz gegen Überströme verbundenen Meßwerte und Parameter nicht vollkommen ausgelastet und können daher die beschriebenen weiteren Aufgaben wahrnehmen.

Falls das Verhältnis zwischen dem tatsächlichen Kapazitätswert und dem benötigten Kapazitätswert hoch ist, ergibt sich eine verhältnismäßig niedrige Ladespannung des verwendeten Kondensators. Dies kann zu einem unerwünscht langsamen Ansprechen des Auslösemagneten führen. Nach einer weiteren Ausgestaltung der Erfindung kann diese Schwierigkeit dadurch behoben werden, daß die Kapazität durch wenigstens zwei in Parallelschaltung über die Wicklung des Auslösemagneten zu entladende Kondensatoren gebildet ist, mit denen jeweils ein steuerbarer Schalter in Reihe liegt, wobei eine Ladesteuerschaltung gesonderte Ausgänge zur nacheinander erfolgenden Betätigung der steuerbaren Schalter in Abhängigkeit von der Messung des Kapazitätswertes jedes der Kondensatoren aufweist.

Die Erfindung wird im folgenden anhand der in der Figuren dargestellten Ausführungsbeispiele näher erläutert.

In der Figur 1 ist ein erstes Ausführungsbeispiel einer Schaltungsanordnung gezeigt, bei der die aufzuladende Kapazität durch einen einzelnen Kondensator gebildet ist.

Die Figur 2 zeigt ein zweites Ausführungsbeipiel einer Schaltungsanordnung, bei der die Kapazität durch drei parallelgeschaltete Kondensatoren gebildet ist.

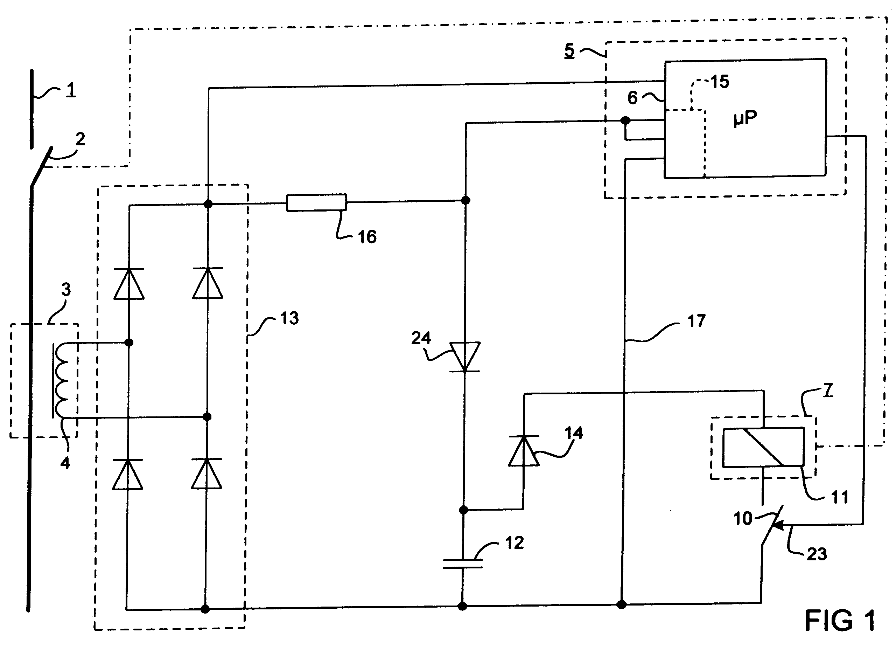

Die in der Figur 1 gezeigte Schaltungsanordnung gehört zu einem Niederspannungs-Leistungsschalter, der nicht vollständig dargestellt ist. Gezeigt ist jedoch - in einpoliger Darstellung - eine Hauptstrombahn 1 mit einem Schaltkontakt 2 sowie mit einem der Hauptstrombahn 1 zugeordneten Stromwandler 3, der eine Sekundärwicklung 4 aufweist. Eine Auslöseschaltung 5 mit einer Mikroprozessoreinrichtung 6 bildet zusammen mit einem Auslösemagneten 7 eine Einrichtung zum Schutz gegen Über- und Kurzschlußströme, wie dies an sich bei Leistungsschaltern der hier betrachteten Art bekannt ist. Strichpunktiert ist angedeutet, daß der Auslösemagnet 7 die Öffnung des Schaltkontaktes 2 veranlassen kann, wenn die Auslöseschaltung 5 einen Schalter 10 betätigt, der in Reihe mit einer Wicklung 11 des Auslösemagneten 7 liegt.

Die zum Betrieb des Auslösemagneten 7 benötigte Energie wird einer Kapazität 12 entnommen, die als einzelner Kondensator ausgebildet ist, der mittels der Sekundärwicklung 4 des Stromwandlers 3 und einer mit der Sekundärwicklung 4 verbundenen Gleichrichterschaltung 13 aufzuladen ist. Wird der Schalter 10, der zum Beispiel ein Thyristor oder ein Schalttransistor sein kann, durch ein von der Auslöseschaltung 5 bereitgestelltes Steuersignal geschlossen, so entlädt sich die Kapazität 12 über eine Diode 14 und die Wicklung 11. Ein Steuerausgang 22 der Mikroprozessoreinrichtung 6 ist hierzu mit einem Steuereingang 23 des Schalters 10 verbunden.

Die Kapazität 12 bedarf einer sehr reichlichen Bemessung ihres Kapazitätswertes, damit auch nach langer Betriebsdauer des Leistungsschalters und einer hiermit verbundenen Alterung des die Kapazität 12 bildenden Kondensators eine ausreichende Energie zur Betätigung des Auslösemagneten 7 zur Verfügung steht. Im Neuzustand ist daher der Kapazitätswert sehr hoch und beträgt aufgrund des Sicherheitszuschlages etwa das Drei- bis Vierfache des eigentlich benötigten Wertes. Dementsprechend lang ist die Zeit für die Aufladung der Kapazität 12. Diese Zeit wird durch eine Überwachungsschaltung 15 dadurch erheblich verkürzt, daß die Aufladung der Kapazität 12 in Abhängigkeit von der benötigten Energie gesteuert wird. Dies geschieht aufgrund folgender Beziehungen zwischen dem Kapazitätswert C, der Energie E, dem Strom i sowie der Spannung u eines Kondensators:

$$E = \text{const.} = 1/2 * C * U^2 \qquad (1)$$

$$U = \sqrt{2 * E/C} \qquad (2)$$

$$C = i * dt/dU \qquad (3)$$

$$C = i * t/\Delta U \qquad (4)$$

Gleichung (1) stellt den Zusammenhang zwischen der Kapazität C, der Spannung U und der gespeicherten Energie E eines Kondensators dar. Hieraus erhält man durch Umformung die Gleichung (2) für die zum Erreichen der geforderten Energie E benötigte Ladespannung der Kapazität 12. Es verbleibt daher, den jeweiligen Kapazitätswert C der Kapazität zu bestimmen. Dies kann durch eine Messung des augenblicklichen Ladestromes i und der augenblicklichen Ladespannung u nach der differentiellen Beziehung gemäß der Gleichung (3) geschehen. Praktisch realisierbar ist eine Messung in gewissen Intervallen $\Delta U$ gemäß der Gleichung (4).

Die Überwachungsschaltung 15 ist Bestandteil der Mikroprozessoreinrichtung 6, welche die vorgenannten Berechnungen durchführt. Es bedarf daher nur einer geeigneten Belegung von Eingängen der Mikroprozessoreinrichtung 6 und einer entsprechenden Programmierung, um ein Steuersignal für die Bereitschaft zum Auslösen des Leistungsschalters (Schaltkontakt 2) zu erzeugen. Da die Mikroprozessoreinrichtung 6 als Bestandteil eines digitalen elektronischen Überstromauslösers auch den Zeitpunkt einer Auslösung aufgrund eines in der Hauptstrombahn 1 fließenden Stromes bestimmt, bedarf es somit nur einer logischen UND-Verknüpfung des Auslösesignales mit dem Steuersignal, um den Auslösemagnet 7 zuverlässig zu betätigen.

Zur Gewinnung des Steuersignales ist mit der Kapazität 12 ein Meßwiderstand 16 in Reihe geschaltet. Die hieran abfallende Spannung wird als Maß für den Ladestrom i an die Mikroprozessoreinrichtung 6 angelegt. Ferner erhält die Mikroprozessoreinrichtung 6 über eine Leitung 17 ein Bezugspotential, um auch die Ladespannung u der Kapazität 12 verarbeiten zu können. Auf die sequentielle Arbeitsweise der Mikroprozessoreinrichtung 6 bei der Erfassung des Ladestromes i und der Ladespannung u sowie die Berechnung des Kapazitätswertes C der Kapazität 12 wird nicht näher eingegangen, da ein mit Mikroprozessoreinrichtungen vertrauter Fachmann die geeigneten Arbeitsschritte problemlos programmieren kann.

Wesentlich für die Schaltungsanordnung gemäß der Figur ist ein in Reihe mit der Kapazität 12 geschalteter steuerbarer Schalter 20, der als Schalttransistor oder löschbarer Thyristor ausgebildet sein kann. Ein Steuereingang 21 des steuerbaren Schalters 20 ist mit einem zugeordneten Steuerausgang 22 der Mikroprozessoreinrichtung 6 verbunden, der dann aktiviert wird, wenn die erläuterten Berechnungen ergeben haben, daß die Kapazität 12 nunmehr eine Energie E der benötigten Größe enthält. Der steuerbare Schalter 20 wird dann geöffnet, während zugleich ein in anderen Schritten des Ablaufprogrammes der Mikroprozessoreinrichtung 6 erzeugter Auslösebefehl an den Steuereingang 23 des Schalters 10 angelegt wird. Der Schalter 10 wird nun geschlossen, um den Auslösemagneten 7 zu betätigen und den Schaltkontakt 2 zu öffnen. Diese Vorgänge erfolgen mit der geringsten möglichen Verzögerung und sind weitgehend unabhängig vom Alter des Leistungsschalters bzw. der zugehörigen Kapazität 12, weil der Ladevorgang beim Erreichen der benötigten Energie E abgebrochen wird.

In die Ladeschaltung der Kapazität 12 ist eine Diode 24 eingefügt, während sich im Stromkreis für die Entladung über die Wicklung 11 die erwähnte Diode 14 befindet, deren Polarität entgegengesetzt zur Polarität der Diode 23 gerichtet ist. Hierdurch werden die Stromkreise für die Ladung und die Entladung der Kapazität 12 voneinander entkoppelt.

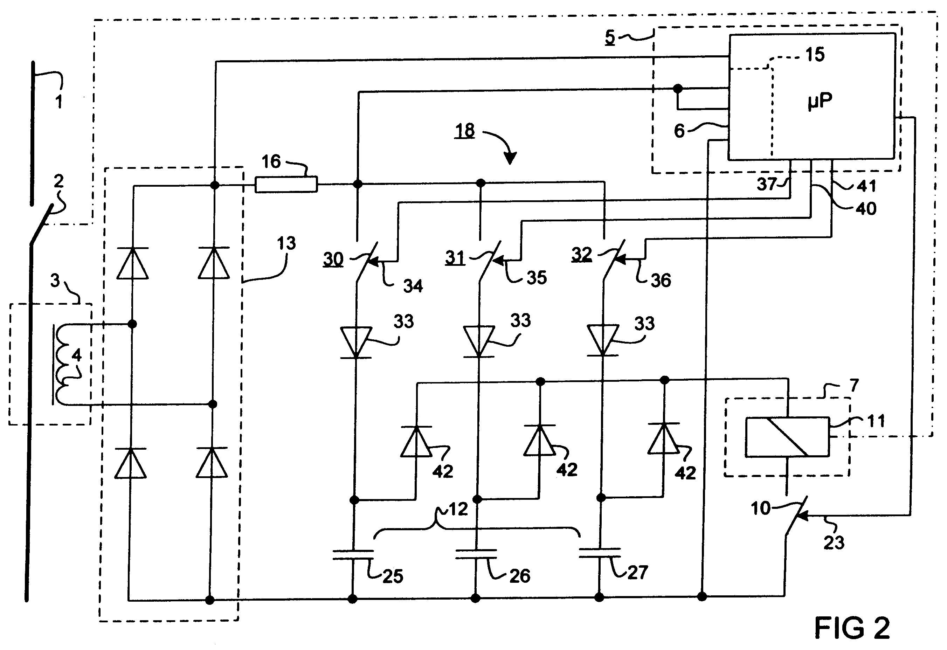

Die Schaltungsanordnung gemäß der Figur 2 unterscheidet sich von der vorstehend beschrieben Schaltungsanordnung dadurch, daß anstelle eines einzelnen Kondensators insgesamt drei Kondensatoren 25, 26 und 27 vorhanden sind, die gemeinsam die Kapazität 12 bilden. Mit jedem dieser Kondensatoren sind ein steuerbarer Schalter 30, 31 bzw. 32 sowie eine Diode 33 in Reihe geschaltet. Ein Steuereingang 34, 35 bzw. 36 des steuerbaren Schalters 30, 31 bzw. 33 ist mit einem zugehörigen Steuerausgang 37, 40 bzw. 41 der Mikroprozessoreinrichtung 6 verbunden. Diese Schaltungsanordnung bildet eine Ladesteuerschaltung 18.

Die Mikroprozessoreinrichtung 6 betätigt im Rahmen ihres Ablaufprogrammes die Steuerausgänge 37, 40 bzw. 41 nacheinander und ermittelt in der schon beschriebenen Weise für jeden der Kondensatoren 25, 26, 27 den jeweiligen Kapazitätswert. Sollte die erste dieser Messungen ergeben, daß der Kapazitätswert des betreffenden Kondensators 25 zur vollständigen Speicherung der benötigten Energie E nicht ausreicht, so wird zunächst der Kondensator 25 voll aufgeladen, bevor der steuerbare Schalter des nächsten Kondensators 26 geschlossen wird und die Messung seines Kapazitätswertes erfolgt. Erst gegen Ende der Lebensdauer des Leistungsschalters und einer entsprechenden Alterung der Kondensatoren 25, 26 und 27 werden die Messungen ergeben, daß der zuletzt angesteuerte Kondensator 27 ganz oder teilweise zur Speicherung der Energie E herangezogen werden muß. Zur Entladung der Kondensatoren 25, 26 und 27 in Parallelschaltung sind Dioden 42 vorgesehen. Die Betätigung des steuerbaren Schalters 14 für den Auslösemagneten 7 erfolgt in der schon beschrieben Weise, wenn die Auslöseschaltung 5 einen entsprechenden Steuerbefehl abgibt.

Für den Betrieb des Auslösemagneten 13 bietet die Schaltungsanordnung nach der Figur 2 besonders günstige Bedingungen, weil die Ladespannung der Kapazität 12 aufgrund der Verteilung der benötigten Energie auf einzelne Kondensatoren weniger stark schwankt. Je nach den gewünschten Eigenschaften kann die Anzahl der Kondensatoren, die zusammen die Kapazität 12 bilden, größer oder kleiner als in Figur 2 gewählt sein.

## Patentansprüche

1. Schaltungsanordnung zur Betätigung eines Auslösemagneten (7) eines Leistungsschalters mit einer durch einen Stromandler (3) gespeisten Gleichrichterschaltung (13), einer durch die Gleichrichterschaltung (13) aufzuladenden, einschließlich eines Sicherheitszuschlages hinsichtlich ihres Kapazitätswertes bemessenen Kapazität (12) zur Speisung des Auslösemagneten (7) und einem in Reihe mit einer Wicklung (11) des Auslösemagneten (7) geschalteten, durch eine Auslöseschaltung (5) betätigbaren Schalter (10) zur Entladung der Kapazität (12) über die Wicklung (11) des Auslösemagneten (7),
dadurch gekennzeichnet, daß eine Überwachungsschaltung (15) zur Erfassung des Ladezustandes der Kapazität (12) und zur Abgabe eines Steuersignales beim Erreichen einer zur sicheren Betätigung des Auslösemagneten (7) ausreichenden Energie vorgesehen ist, wobei die Überwachungsschaltung (15) einen Schaltungsteil zur Messung des Kapazitätswertes der Kapazität (12) und zur Berechnung der zum Erreichen der geforderten Energie benötigten Ladespannung bei gegebenem Kapazitätswert aufweist.

2. Schaltungsanordnung nach Anspruch 1,
dadurch gekennzeichnet, daß der Schaltungsteil zur Messung des Kapazitätswertes und der zum Erreichen der geforderte Energie benötigten Ladespannung durch eine zur Ausloseschaltung (5) gehörende Mikroporzessoreinrichtung (6) gebildet ist.

3.  Schaltungsanordnung nach Anspruch 1 oder 2, **dadurch gekennzeichnet,** daß die Kapazität (12) durch wenigstens zwei in Parallelschaltung über die Wicklung (11) des Auslösemagneten (7) zu entladende Kondensatoren (25, 26, 27) gebildet ist, mit denen jeweils ein steuerbarer Schalter (30, 31, 32) in Reihe liegt, wobei eine Ladesteuerschaltung (18) gesonderte Steuerausgänge (37, 40, 41) zur nacheinander erfolgenden Betätigung der steuerbaren Schalter (30, 31, 32) in Abhängigkeit von der Messung des Kapazitätswertes jedes der Kondensatoren (25, 26, 27) aufweist.

FIG 1

FIG 2